# EUROPEAN PATENT SPECIFICATION

(11) **EP 2 597 282 B1**
(45) Date of publication and mention of the grant of the patent: **11.03.2015**
(21) Application number: 12193904.5
(22) Date of filing: 22.11.2012
(51) Int. Cl.: F02B 67/06, F01L 1/02, F16H 7/02, F16H 7/24

(54) **Method of removing engine accessory and accessory mounting structure**
Verfahren zum Entfernen eines Nebenaggregats und Montagestruktur für Nebenaggregat
Procédé d'élimination d'accessoire de moteur et structure de montage d'accessoire

(30) Priority: 25.11.2011 JP 2011258058
(43) Date of publication of application: 29.05.2013
(73) Proprietor: Honda Motor Co., Ltd., Tokyo 107-8556 (JP)
(72) Inventor: Fujimoto, Tomoya, Saitama, 351-0193 (JP); Hirayama, Naoto, Saitama, 351-0193 (JP); Masago, Kiyohiko, Saitama, 351-0193 (JP)
(74) Representative: Jordan, Volker Otto Wilhelm

(56) References cited:
- WO-A1-2004/101973
- DE-U1- 9 315 919
- JP-A- H11 107 768
- US-A1- 2002 026 701

## Description

### BACKGROUND OF THE INVENTION

### Field of the Invention

The present invention relates to a method of removing an accessory of an engine and an accessory mounting structure. In more detail, it relates to a method of removing an accessory that is mounted to an engine block and is driven by the rotation of the crankshaft, as well as a mounting structure.

### Related Art

Conventionally, the driving of accessories such as high-pressure fuel pumps and power steering has commonly been performed by the rotation of the crankshaft through a chain and sprockets.

To carry out maintenance on such accessories, it is generally required to remove the accessory from the engine. Upon doing so, it is necessary to perform a complicated operation requiring time such as loosening the chain and taking the chain off from the sprocket, and removing other components.

In order to save on such time, a configuration has been disclosed that retains the sprocket on the same axis as the drive shaft of an accessory by providing a hexagonally-shaped joint to the sprocket, and fitting a jig of the same shape to this joint, followed by inserting a tool inside of the jig, removing a nut fastening the sprocket and the drive shaft of the accessory, and then pulling the accessory out in an opposite direction to the sprocket (for example, refer to Patent Document 1).

Patent Document 1: Japanese Patent No. 3387389

### SUMMARY OF THE INVENTION

The technology described in Patent Document 1 has the advantages of making it unnecessary to perform complex operations requiring much time such as loosening the chain and unfastening the chain from the sprocket, and removing other components.

However, the technology described in Patent Document 1 does not allow for simple removal of an accessory in a case of the fitment between the accessory and a housing such as an engine block or cylinder block to which the accessory is mounted being tight, or a case in which the fitting surfaces between the accessory and housing being sealed.

In other words, although a pulling force acting on the accessory from an opposite side to the sprocket, or a pressing pressure acting on the drive shaft of the accessory from the sprocket side must be applied with at least a certain magnitude, the technology described in Patent Document 1 does not apply a pulling force or pressing pressure with at least a certain magnitude.

The present invention has been made taking the aforementioned issues into account, and has an object of providing a method of removing an accessory of an engine, as well as an accessory mounting structure that can allow for a pressing pressure of at least a certain magnitude to act on the drive shaft of an accessory from a sprocket side with a simple configuration, thereby enabling the drive shaft of the accessory to be pushed out.

A method of removing an accessory of an engine according to the present invention, in which the engine (e.g., the engine 1 described later) includes: an end-less member (e.g., the end-less member 22 described later) and a rotating body (e.g., the rotating body 40 described later) for transmitting rotation of a crankshaft (e.g., the crankshaft 11 described later) to the accessory (e.g., the accessory 30 described later); a fastening member (e.g., the fastening bolt 37 described later) for fastening the rotating body to a drive shaft (e.g., the drive shaft 34 described later) of the accessory, the end-less member and the rotating body being housed between an engine main body (e.g., the cylinder block 10 described later) and a cover member (e.g., the chain case 20 described later); a first cylindrical rib (e.g., the cylindrical rib 43 described later) that extends from the rotating body towards the cover member; a second cylindrical rib (e.g., the cylindrical rib 44 described later) that extends from the rotating body towards the engine main body; a first retention rib (e.g., the retention rib 24 described later) that extends from the cover member towards the rotating body so as to overlap with the first cylindrical rib in a radial direction; and a second retention rib (e.g., the retention rib 15 described later) that extends from the engine main body towards the rotating body so as to overlap with the second cylindrical rib in a radial direction, the method characterized in that the accessory from the engine main body by forming threads (e.g., the threads 48 described later) in an inner circumference of one among the first cylindrical rib and the first retention rib that is located more inwards, and pressing out the drive shaft using a tool (e.g., the tool 50 described later) having threads (e.g., the threads 51 described later) that thread with said threads.

According to this invention, the threads are formed in the inner circumference of either one among the first cylindrical rib and the first retention rib that is located more inwards, and the drive shaft of the accessory is pushed out using the tool having the threads that thread with these threads. For this reason, it is possible to apply a pushing pressure gradually on the accessory. Therefore, removal is possible without applying excessive force on the accessory.

In addition, the first and second retention ribs respectively retain the first and second cylindrical ribs, even when the drive shaft of the accessory is removed from the rotating body. For this reason, falling of the rotating body is avoided. Therefore, the accessory can be removed and installed, without removing the cover member, and without removing the end-less member from the rotating body.

In this case, it is preferable for the accessory to be removed from the engine main body by forming said threads in an inner circumference of the first cylindrical rib and pressing out the drive shaft using the tool.

According to the present invention, threads are formed in the first cylindrical rib of the rotating body. For this reason, it is possible to hold the rotating body by way of the tool. Therefore, an extrusion force can be made to exactly act on the drive shaft.

In this case, it is preferable for the drive shaft to include a tapered part (e.g., the tapered part 35 described later) that tapers off from a side of the accessory towards a side of the rotating body, and for the rotating body to include a tapered hole (e.g., the tapered hole 46 described later) into which the tapered part is inserted.

According to the present invention, the drive shaft of the accessory and the rotating body have a tapered fit. For this reason, the interlocking force between the drive shaft and the rotating body is strong. Therefore, it is possible to easily release the fitting, by applying a pressing pressure gradually using the tool.

In this case, it is preferable for the accessory to include a tubular part (e.g., the cylindrical part 31 described later) that surrounds an outer circumference of the drive shaft, for the engine main body to include a mounting hole (e.g., the mounting hole 14 described later) into which the tubular part is inserted, and for the tubular part and the mounting hole are fitted together through a sealing member (e.g., the sealing member 32 described later).

According to the present invention, the accessory and the engine main body are fitted together via a sealing member. For this reason, the interlocking force between the accessory and the engine main body is strong. Therefore, it is possible to easily release the fitting, by applying a pressing pressure gradually using the tool.

In this case, it is preferable for the end-less member to be a chain (e.g., the chain 22 described later), for the rotating body is a sprocket body (e.g., the sprocket body 40 described later), and for a tooth-jumping prevention rib (e.g., the tooth-jumping prevention ribs 16, 25 described later) that prevents tooth jumping of the chain to be provided outwards in a radial direction of the sprocket body to at least one among the engine main body and the cover member.

According to the present invention, when the sprocket body produces axial displacement by removing the drive shaft (if this is large, there is concern over tooth-jumping of the chain occurring), the tooth-jumping prevention rib restricts the axial displacement of the sprocket body to no more than a predetermined range. For this reason, it is possible to prevent tooth-jumping of the chain.

In this case, it is preferable for the engine main body and the cover member are joined through a flange (e.g., the flanges 13, 21 described later), and for the tooth-jumping prevention rib to be provided at the flange.

According to the present invention, the tooth-jumping prevention rib is provided to the rigid flange. For this reason, it is unnecessary to establish a dedicated rib for only providing the tooth-jumping prevention rib. In addition, the rigidity of the engine main body or cover member is raised due to the presence of the tooth-jumping prevention rib.

In this case, it is preferable for a guide rib for guiding oil to be provided to either one among the engine main body and the cover member so as to cover a circumferential direction of the sprocket body, and for the tooth-jumping prevention rib to be provided to the guide rib.

According to the present invention, the tooth-jumping prevention rib is provided to the guide rib that guides oil for lubricating the chain and sprocket. For this reason, it is unnecessary to establish a dedicated rib for only providing the tooth-jumping prevention rib. In addition, the guide rib is further reinforced and the rigidity of the engine main body or cover member is raised due to the presence of the tooth-jumping prevention rib.

In this case, it is preferable for the accessory to be a fuel injection pump (e.g., the fuel injection pump 30) that supplies fuel to the engine.

According to the present invention, the rotating body sprocket body is retained without falling, even if removing the drive shaft of the fuel injection pump. For this reason, when reassembling after removal, it is unnecessary to reset the timing of the fuel injection pump (the timing of the rotation of the crankshaft and the ejection timing of the fuel injection pump must coincide at a predetermined timing).

In an accessory mounting structure for an engine according to the present invention, in which the engine includes an end-less member and a rotating body for transmitting rotation of a crankshaft to an accessory, and a fastening member for fastening the rotating body to a drive shaft of the accessory, the end-less member and the rotating body being housed between an engine main body and a cover member, the structure includes: a first cylindrical rib that extends from the rotating body towards the cover member; a second cylindrical rib that extends from the rotating body towards the engine main body; a first retention rib that extends from the cover member towards the rotating body so as to overlap with the first cylindrical rib in a radial direction; and a second retention rib that extends from the engine main body towards the rotating body so as to overlap with the second cylindrical rib in a radial direction, in which threads are formed in an inner circumference of one among the first cylindrical rib and the first retention rib that is located more inwards, and the drive shaft can be pushed out using a tool having threads that thread with said threads.

According to the present invention, a pressing pressure of at least a certain magnitude can be made to act on the drive shaft of the accessory from a rotating body side with a simple configuration, thereby enabling the drive shaft of the accessory to be pushed out.

According to the present invention, a pressing pressure of at least a certain magnitude can be made to act on the drive shaft of the accessory from a rotating body side with a simple configuration, thereby enabling the drive shaft of the accessory to be pushed out. '

### BRIEF DESCRIPTION OF THE DRAWINGS

FIG. 1 is a front view with a chain case removed, showing a main section of an engine equipped with an accessory according to an embodiment of the present invention;
FIG. 2 is a vertical sectional side view looking from the left side of the engine equipped with an accessory shown in FIG. 1;
FIG. 3 is a vertical sectional side view showing a state in which a maintenance cover of the engine has been removed shown in FIG. 2 and a fastening bolt has been removed;
FIG. 4 is a vertical sectional side view showing a state in which a tool is threaded with the sprocket body of the engine shown in FIG. 3, and the drive shaft of the accessory is slight pushed out;
FIG. 5 is a vertical sectional side view showing a state in which the accessory has been extracted from the engine shown in FIG. 4, and the tool has been removed from the sprocket body;
FIG. 6 is a vertical sectional side view showing a state in which the sprocket body of the engine shown in FIG. 5 is supported by a retention rib; and
FIG. 7 is a rear view showing a back side of a chain case of the engine shown in FIG. 6, along with the positional relationship between the sprocket at the front and the chain.

### DETAILED DESCRIPTION OF THE INVENTION

Hereinafter, an embodiment of the present invention will be explained while referencing the drawings.

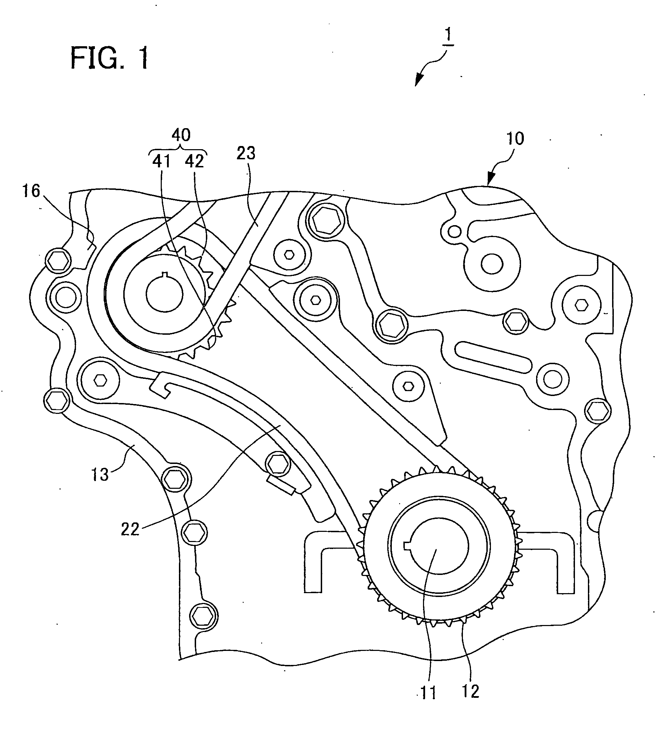

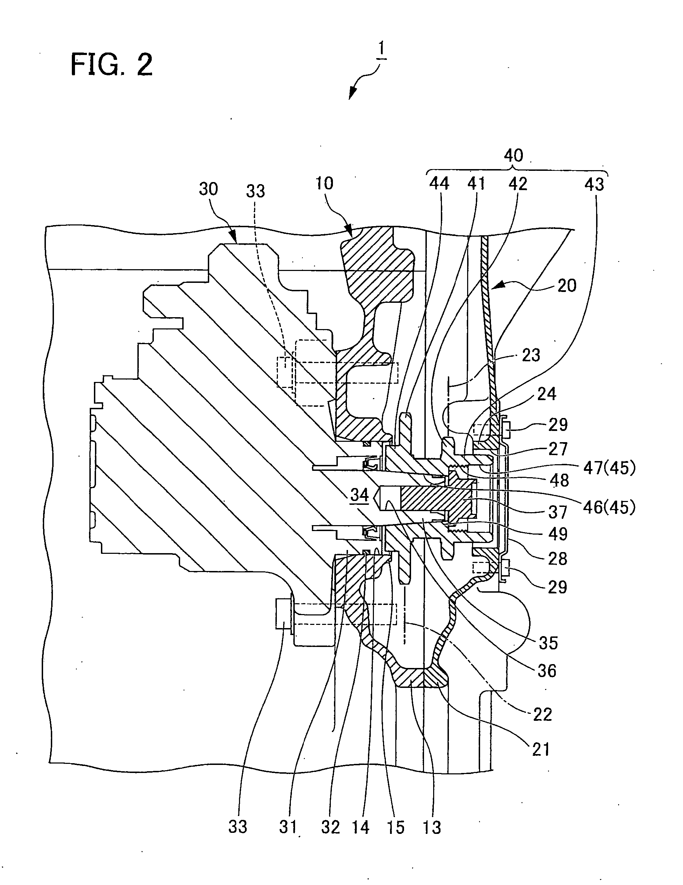

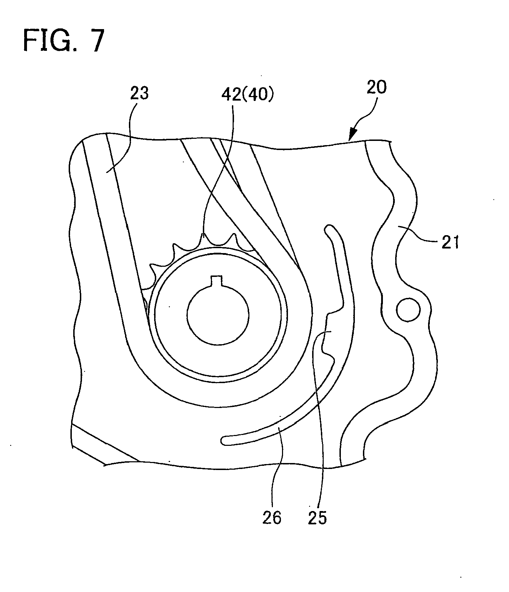

FIG. 1 is a front view with a chain case 20 removed, showing a main section of an engine 1 equipped with an accessory 30 according to an embodiment of the present invention. FIGS. 2 to 6 are vertical sectional side views, and FIG. 7 is a rear view.

The engine 1 includes an engine block or cylinder block (hereinafter referred to as cylinder block) 10 as an engine main body. The cylinder block 10 includes a crankshaft 11 that extends front to back. A front end of the crankshaft 11 extends forwards from the cylinder block 10. A sprocket 12 is fixed to the front end of the crankshaft 11.

The chain case 20 as a cover member is mounted to a front part of the cylinder block 10 at a front face side thereof. The chain case 20 includes a flange 21 at the periphery. A flange 13 corresponding to the flange 21 of the chain case 20 is formed at a front face side of the front part of the cylinder block 10.

By fixing the flange 21 to the flange 13 of the cylinder block 10 by way of an appropriate number of bolts or the like, the chain case 20 is mounted to the front face side of the front part of the cylinder block 10.

The accessory 30 is mounted to the front part of the cylinder block 10 at a back face side. In the present embodiment, the accessory 30 is specifically a fuel injection pump (high-pressure fuel pump).

The cylinder block 10 includes a mounting hole 14 for mounting the fuel injection pump 30. The mounting hole 14 is a cylindrical through hole that extends front to back.

The fuel injection pump 30 includes at a front side thereof a cylindrical part 31 serving as a tubular part that is inserted into the mounting hole 14 of the cylinder block 10. Between the outer circumference of the cylindrical part 31 and the inner circumference of the mounting hole 14, for example, an appropriate sealing member 32 such as an O-ring is arranged.

By inserting the cylindrical part 31 into the mounting hole 14 and fixing the housing of the pump main body to the cylinder block 10 by way of an appropriate number of mounting bolts 33, the fuel injection pump 30 is mounted to a back face side of the front part of the cylinder block 10.

The fuel injection pump 30 includes a drive shaft 34 that extends front to back so as to be surrounded by the cylindrical part 31. The drive shaft 34 of the fuel injection pump 30 extends forwards from the cylindrical part 31, and extends forwards also from the mounting hole 14 of the cylinder block 10.

A tapered part 35 that becomes gradually narrower going forwards is formed at the outer circumference of a forward extending portion of the drive shaft 34.

A threaded hole 36 is formed in the center of the forward extending portion of the drive shaft 34. A fastening bolt 37 that integrally fastens a sprocket body 40 described later and the drive shaft 34 is fixed in the threaded hole 36.

The rotating body 40 is mounted to the drive shaft 34 of the fuel injection pump 30. In the present embodiment, the rotating body 40 is specifically a sprocket body.

The sprocket body 40 is a body in which a sprocket 41 of a relatively large diameter arranged at the rear, and a sprocket 42 of relatively small diameter arranged at the front are integrally formed.

The sprocket 41 at the rear is connected to be driven by the crankshaft 11 by an end-less member 22 wound therebetween and a sprocket 12 of the crankshaft 11. In the present embodiment, the end-less member 22 is specifically a chain.

In other words, the drive shaft 34 of the fuel injection pump 30 is connected to be driven by the crankshaft 11 through the sprocket 12, chain 22 and sprocket 41.

The sprocket 42 at the front has a chain 23 wound between a sprocket (not illustrated) of a cam shaft (not illustrated), and is connected to drive this cam shaft.

In other words, the cam shaft is connected to be driven by the crankshaft 11 through the sprocket 12, chain 22, sprockets 41, 42 and chain 23.

The sprocket body 40 includes a cylindrical rib 43 serving as a first cylindrical rib that extends forwards further from the sprocket 42 at the front.

The sprocket body 40 includes a cylindrical rib 44 serving as a second cylindrical rib that extends rearwards further from the sprocket 41 at the rear.

The chain case 20 includes a retention rib 24 serving as a first retention rib that extends rearwards from the back face of an opening 27 for maintenance described later, so as to overlap with the cylindrical rib 43 of the sprocket 42 in a radial direction.

The cylinder block 10 includes a retention rib 15 serving as a second retention rib that extends forwards from a front face of the mounting hole 14, so as to overlap with the cylindrical rib 44 of the sprocket 41 in a radial direction.

In other words, the retention rib 24 of the chain case 20 is arranged on an outer side in the radial direction of the cylindrical rib 43 of the sprocket 42 at the front.

The retention rib 15 of the cylinder block 10 is arranged on an outer side in the radial direction of the cylindrical rib 44 of the sprocket 41 at the rear.

The sprocket body 40 includes a through hole 45 that penetrates a central axis thereof.

A tapered hole 46 corresponding to the tapered part 35 formed at the outer circumference of the drive shaft 34 of the fuel injection pump 30 is formed in the through hole 45 in a region from a rear end of the sprocket body 40 to the sprocket 42 at the front.

A large-diameter hole 47 having a bore larger than the bore at a front end of the tapered hole 46 is formed in the through hole 45 in a region of the cylindrical rib 43 of the sprocket body 40. Threads 48 that thread with threads 51 formed in the outer circumference of a dedicated tool 50 are formed in the inner circumference of the large diameter hole 47.

A stepped part 49 is formed at a boundary portion of the sprocket body 40 between the tapered hole 46 and the large diameter hole 47. The stepped part 49 functions as an engaging part that engages with a head flange of the fastening bolt 37, when fastening the sprocket body 40 and the drive shaft 34 of the fuel injection pump 30 by way of the fastening bolt 37.

As shown in FIGS. 1 and 7, the cylinder block 10 and the chain case 20 include tooth-jumping prevention ribs 16 and 25. When the drive shaft 34 of the fuel injection pump 30 has been pulled out from the sprocket body 40, the sprocket body 40 produces axial displacement, and the tooth-jumping prevention ribs 16 and 25 prevent the tooth-jumping of the chains 22 and 23 from occurring as a result.

As shown in FIG. 1, the tooth-jumping prevention rib 16 is formed on the cylinder block 10 at a position of at a predetermined clearance from the outer periphery of the chain 22 in a region meshing with the sprocket 41.

The clearance between the tooth-jumping prevention rib 16 and the outer periphery of the chain 22 is set to a value that enables the chain 22 to be prevented from riding over the sprocket 41 and tooth jumping from occurring, due to the imperfect alignment of the sprocket 41.

As shown in FIG. 7, the tooth-jumping prevention rib 25 is formed on the chain case 20 at a position with a predetermined clearance from the outer periphery of the chain 23 in a region meshing with the sprocket 42.

A guide rib 26 that guides oil is initially formed in the chain case 20. The tooth-jumping prevention rib 25 is integrally formed on this guide rib 26.

The clearance between the tooth-jumping prevention rib 25 and the outer periphery of the chain 23 is set to a value that enables the chain 23 to be prevented from riding over the sprocket 42 and tooth jumping from occurring, due to the imperfect alignment of the sprocket 42.

The opening 27 for maintenance is formed in the chain case 20 on an axis extending from the drive shaft 34 of the fuel injection pump 30 through the through hole 45 of the sprocket body 40. The opening 27 is covered by a maintenance cover 28. The maintenance cover 28 is mounted to the chain case 20 by a bolt 29.

Upon removing the fuel injection pump 30 from the engine 1, and mounting the fuel injection pump 30 to the engine 1, the maintenance cover 28 is removed and installed to the chain case 20.

Next, a method of removing an accessory of the engine 1 configured in the above way will be explained.

Prior to this, the state in which an accessory, i.e. the fuel injection pump 30, is mounted at a predetermined position on the engine 1 will be briefly explained while referencing FIG. 2.

In this state, the cylindrical part 31 of the fuel injection pump 30 is inserted into the mounting hole 14 of the cylinder block 10. A housing of the pump main body is fixed to a back face side of the front part of the cylinder block 10 by an appropriate number of mounting bolts 33. The tapered part 35 of the drive shaft 34 is inserted into the tapered hole 46 of the through hole 45 of the sprocket body 40. In a state in which the head flange of the fastening bolt 37 engages the stepped part 49 of the through hole 45, the sprocket body 40 and the drive shaft 34 are integrally fastened by the fastening bolt 37 threading into the threaded hole 36 of the drive shaft 34.

The maintenance cover 28 of the chain case 20 is mounted at a predetermined position by the bolts 29.

From the state shown in FIG. 2, the fuel injection pump 30 is removed.

First, the bolts 29 are unfastened, and then the maintenance cover 28 is removed from the chain case 20 (not illustrated).

Then, jamming is carried out by fitting an appropriate tool to the crankshaft 11 so that the sprocket body 40 will not rotate.

As necessary, jamming may be carried out first, and then the maintenance cover 28 may be removed.

When performing jamming, the sprocket 12 of the crankshaft 11 is aligned in a predetermined direction. This is because it is necessary for the timing of the rotation of the crankshaft 11 and the ejection timing of the fuel injection pump 30 to match at a predetermined timing.

In other words, a cam piece of the fuel injection pump 30 is set to match the phase making a base circle (phase when outbound).

For this reason, it is preferable for a mark coinciding with a key groove of the sprocket 40 to be added to the chain case 20, for example. Alternatively, it is preferable for a mark for phase locking to be added to the chain case 20 and crank pulley (not illustrated).

Next, the fastening bolt 37 is unfastened using an appropriate tool (not illustrated).

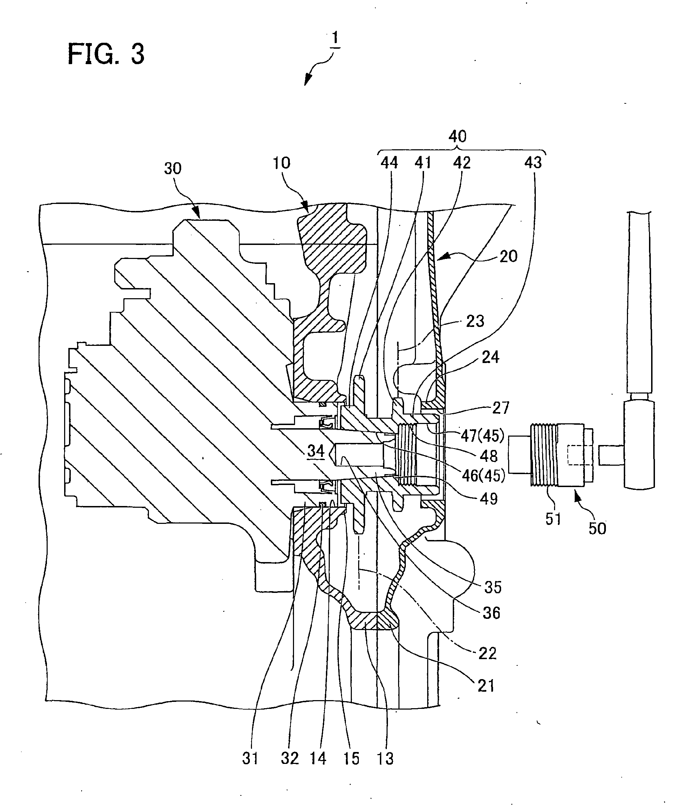

FIG. 3 illustrates a state in which the maintenance cover 28 of the chain case 20 has been removed, and the fastening bolt 37 has further been unfastened, from the state shown in FIG. 2. The tool 50 is also illustrated in FIG. 3.

Next, an appropriate number of mounting bolts 33 mounting the fuel injection pump 30 to the cylinder block 10 is loosened from the back face side. Alternatively, the mounting bolts 33 are unfastened.

Since a sealing member 32 is arranged between the outer circumference of the cylindrical part 31 of the fuel injection pump 30 and the inner circumference of the mounting hole 14 of the cylinder block 10, the fuel injection pump 30 simply cannot be displaced to the back face side of the cylinder block, and cannot be removed, even if the mounting bolts 33 are loosened or unfastened.

Therefore, threads 51 of the tool 50 are made to thread with threads 48 of the large diameter hole 47, by plugging the tool 50 into the inside of the large diameter hole 47 of the sprocket body 40.

When threading between the threads 51 and the threads 48 begins, the direction of travel of the leading end face of the tool 50 (i.e. rear end face) abuts the front end of the drive shaft 34 of the fuel injection pump 30. Then, when the tool 50 is further threaded in from this abutting state, the drive shaft 34 is pressed rearwards relative to the sprocket body 40, and the fuel injection pump 30 is also pressed rearwards.

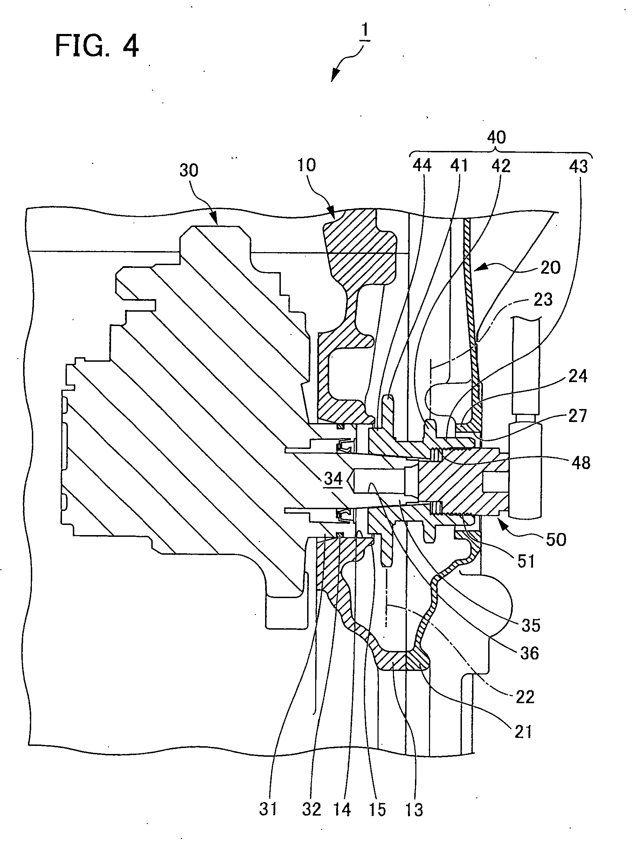

FIG. 4 shows a state in which the drive shaft 34 has been pressed rearwards along with the fuel injection pump 30, by inserting and threading the tool 50 into the sprocket body 40, from the state shown in FIG. 3.

Then, when the sealing member 32 arranged between the outer circumference of the cylindrical part 31 of the fuel injection pump 30 and the inner circumference of the mounting hole 14 of the cylinder block 10 slips out rearwards from the cylinder block 10, the fuel injection pump 30 can be simply removed at the back face side of the cylinder block 10.

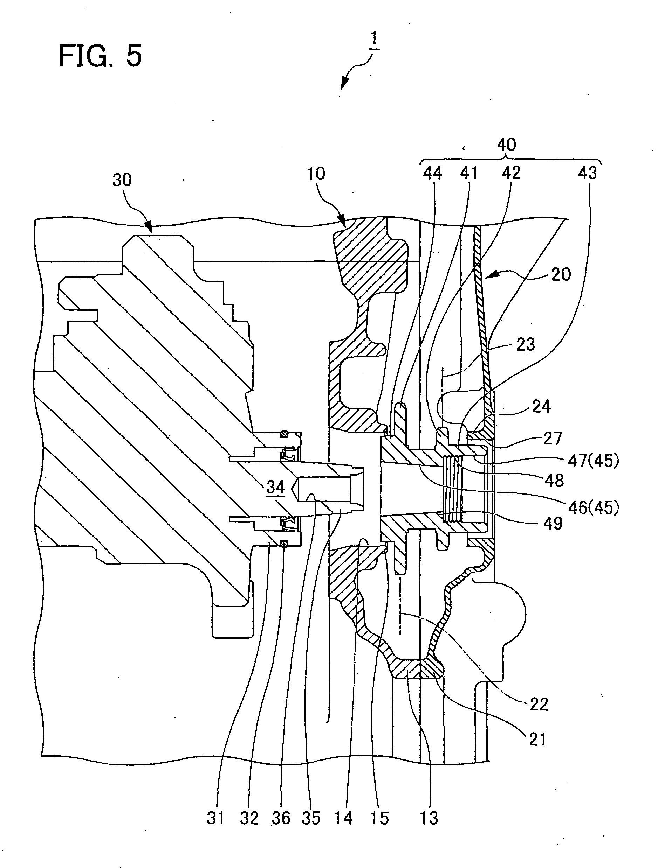

FIG. 5 shows a state in which the fuel injection pump 30 has been removed at the back face side of the cylinder block 10.

When the sealing member 32 that is between the cylindrical part 31 of the fuel injection pump 30 and the mounting hole 14 of the cylinder block 10 slips out rearwards from the mounting hole 14, the tool 50 may slip out from the large diameter hole 47 of the sprocket body 40.

When the fuel injection pump 30 is pulled out rearwards from the cylinder block 10, the sprocket body 40 loses support from the drive shaft 34 and may fall.

However, the retention rib 24 of the chain case 20 is formed at an outer side in the radial direction of the cylindrical rib 43 of the sprocket body 40, and the retention rib 15 of the cylinder block 10 is formed at an outer side in the radial direction of the cylindrical rib 44 of the sprocket body 40.

For this reason, falling of the sprocket body 40 is avoided by the cylindrical rib 43 being locked by the retention rib 24 of the chain case 20, and the cylindrical rib 44 being locked by the retention rib 15 of the cylinder block 10.

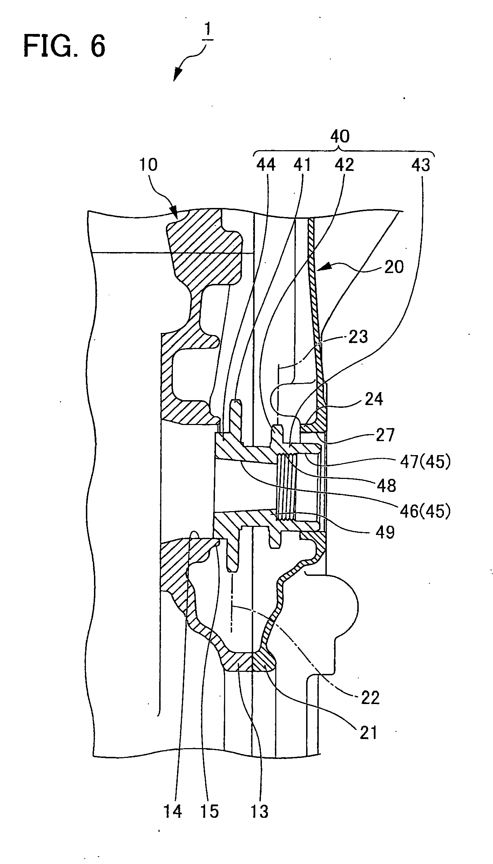

FIG. 6 shows a state in which falling of the sprocket body 40 is avoided by the cylindrical ribs 43 and 44 being locked by the retention ribs 24 and 15.

It is not possible to avoid axial displacement even if falling of the sprocket body 40 is avoided, since it does not mean that the shaft is supported.

For this reason, there is concern over the chains 22 and 23 riding over the sprockets 41 and 42 and thus tooth jumping occurring due to the axial displacement of the sprocket body 40.

However, the tooth-jumping prevention rib 16 for preventing tooth jumping of the chain 22 due to axial displacement of the sprocket 41 is formed on the cylinder block 10.

In addition, the tooth-jumping prevention rib 25 for preventing tooth jumping of the chain 23 due to axial displacement of the sprocket 42 is formed on the chain case 20.

For this reason, tooth jumping of the chains 22 and 23 is avoided by tooth jumping of the chain 22 due to axial displacement of the sprocket 41 being prevent by the tooth-jumping prevention rib 16, and tooth jumping of the chain 23 due to axial displacement of the sprocket 42 being prevented by the tooth jumping prevention rib 25.

To mount the fuel injection pump 30, first, the tapered part 35 of the drive shaft 34 is inserted into the tapered hole 46 of the through hole 45 of the sprocket body 40, and the cylindrical part 31 is inserted into the mounting hole 14 of the cylinder block 10.

The housing of the pump main body is fixed to a back face side of the front part of the cylinder block 10 by an appropriate number of mounting bolts 33.

By inserting a key and threading the fastening bolt 37 into the threaded hole 36 of the drive shaft 34, the sprocket body 40 and drive shaft 34 are integrally fastened.

Subsequently, the maintenance cover 28 is mounted at a predetermined position on the chain case 20 by the bolts 29.

There are the following such effects according to the present embodiment.
(1) The threads 48 are formed in the inner circumference of the first cylindrical rib 43, and the drive shaft 34 of the fuel injection pump 30 is pushed out using the tool 50 having the threads 51 that thread with these threads 48. For this reason, it is possible to apply a pushing pressure gradually on the fuel injection pump 30. Therefore, removal is possible without applying excessive force on the fuel injection pump 30.
(2) The first and second retention ribs 24 and 15 respectively retain the first and second cylindrical ribs 43 and 44, even when the drive shaft 34 of the fuel injection pump 30 is removed from the sprocket body 40. For this reason, falling of the sprocket body 40 is avoided. Therefore, the fuel injection pump 30 can be removed and installed, without removing the chain case 20 from the cylinder block 10, and without removing the chains 22 and 23 from the sprocket body 40.
(3) The drive shaft 34 of the fuel injection pump 30 and the sprocket body 40 have a tapered fit. For this reason, the interlocking force between the drive shaft 34 and the sprocket body 40 is strong. Therefore, it is possible to easily release the fitting, by applying a pressing pressure gradually using the tool 50.
(4) The fuel injection pump 30 and the cylinder block 10 fit together via the sealing member 32. For this reason, the interlocking force between the fuel injection pump 30 and the cylinder block 10 is strong. Therefore, it is possible to easily release the fitting, by applying a pressing pressure gradually using the tool 50.
(5) When the sprocket body 40 produces axial displacement by removing the drive shaft 34 (if this is large, there is concern over tooth jumping of the chains 22 and 23 occurring), the tooth-jumping prevention ribs 16 and 25 restrict the axial displacement of the sprocket body 40 to no more than a predetermined range. For this reason, it is possible to prevent tooth jumping of the chains 22 and 23.
(6) The tooth-jumping prevention rib 16 is provided to the rigid flange 13. For this reason, it is unnecessary to establish a dedicated rib for only providing the tooth-jumping prevention rib 16. In addition, the rigidity of the cylinder block 10 or chain case 20 is raised due to the presence of the tooth-jumping prevention rib 16.
(7) The tooth-jumping prevention rib 25 is provided to the guide rib 26 that guides oil for lubricating the chains 22 and 23 and sprockets 41 and 42. For this reason, it is unnecessary to establish a dedicated rib for only providing the tooth-jumping prevention rib 25. In addition, the guide rib 26 is further reinforced and the rigidity of the cylinder block 10 or chain case 20 is raised due to the presence of the tooth-jumping prevention rib 25.
(8) The sprocket body 40 is retained without falling, even if removing the drive shaft 34 of the fuel injection pump 30. For this reason, when reassembling after removal, it is unnecessary to reset the timing of the fuel injection pump 30 (the timing of the rotation of the crankshaft 11 and the ejection timing of the fuel injection pump 30 must coincide at a predetermined timing).

It should be noted that, although the retention rib 24 of the chain case 20 is arranged at the outer side in the radial direction of the cylindrical rib 43 of the sprocket 42 at the front in the above-mentioned embodiment, it is not limited thereto.

For example, the retention rib 24 of the chain case 20 may be arranged at an inner side in the radial direction of the cylindrical rib 43 of the sprocket 42 at the front.

In addition, although the retention rib 15 of the cylinder block 10 is arranged at the outer side in the radial direction of the cylindrical rib 44 of the sprocket 41 at the rear in the above-mentioned embodiment, it is not limited thereto.

For example, the retention rib 15 of the cylinder block 10 may be arranged at an inner side in the radial direction of the cylindrical rib 44 of the sprocket 41 at the rear.

In addition, although the tooth-jumping prevention rib 16 of the chain 22 meshing with the sprocket 41 at the rear is formed in the cylinder block 10, while the tooth-jumping prevention rib 25 of the chain 23 meshing with the sprocket 42 at the front is formed on the chain case 20 in the above-mentioned embodiment, it is not limited thereto.

For example, the tooth-jumping prevention ribs 16 and 25 of the chains 22 and 23 may both be formed on the cylinder block 10.

For example, the tooth-jumping prevention ribs 16 and 25 of the chains 22 and 23 may both be formed on the chain case 20.

In addition, although the accessory 30 is mounted to a back face side of the front part of the cylinder block 10 in the above-mentioned embodiment, it is not limited thereto.

For example, the accessory 30 may be mounted on a front face side of the front part of the cylinder block 10, i.e. between the cylinder block 10 and the chain case 20.

In addition, although the cylinder block 10 is exemplified as the engine main body in the above-mentioned embodiment, it is not limited thereto.

For example, other than a cylinder block, the engine main body may be a cylinder head, oil pan, or the like.

A method of removing an accessory of an engine, as well as an accessory mounting structure are provided that allows for the drive shaft of an accessory (30) to be pushed out from a sprocket side. An engine (1) including a chain (22) and sprocket (40), the sprocket being housed between an engine main body and a chain case (20), further includes first and second cylindrical ribs (43, 44) that extend from the sprocket towards the engine main body, respectively, and first and second retention ribs that respectively extend from the engine main body towards the sprocket so as to overlap with the first and second cylindrical ribs in a radial direction, in which the drive shaft is pushed out using a tool (50) having threads (51) that thread with threads (48) in an inner circumference of the first cylindrical rib, thereby removing the accessory from the engine main body.

## Claims

1. A method of removing an accessory of an engine, the engine (1) including: an end-less member (22) and a rotating body (40) for transmitting rotation of a crankshaft (11) to the accessory (30);
a fastening member (37) for fastening the rotating body (40) to a drive shaft (34) of the accessory (30),
wherein the end-less member (22) and the rotating body (40) are housed between an engine main body (10) and a cover member (20);
a first cylindrical rib (43) that extends from the rotating body (40) towards the cover member (20);
a second cylindrical rib (44) that extends from the rotating body (40) towards the engine main body (10);
a first retention rib (24) that extends from the cover member (20) towards the rotating body (40) so as to overlap with the first cylindrical rib (43) in a radial direction; and
a second retention rib (15) that extends from the engine main body (10) towards the rotating body (40) so as to overlap with the second cylindrical rib (44) in a radial direction,
the method comprising removing the accessory (30) from the engine main body (10) by forming threads (48) in an inner circumference of one among the first cylindrical rib (43) and the first retention rib (24) that is located more inwards, and pressing out the drive shaft (34) using a tool (50) having threads (51) that thread with said threads (48).

2. The method of removing an accessory of an engine according to claim 1,
wherein the accessory (30) is removed from the engine main body (10) by forming said threads (48) in an inner circumference of the first cylindrical rib (43) and pressing out the drive shaft (34) using the tool (50).

3. The method of removing an accessory of an engine according to claim 1 or 2,
wherein the drive shaft (34) includes a tapered part (35) that tapers off from a side of the accessory (30) towards a side of the rotating body (40), and
the rotating body (40) includes a tapered hole (46) into which the tapered part (35) is inserted.

4. The method of removing an accessory of an engine according to any one of claims 1 to 3,
wherein the accessory (30) includes a tubular part (31) that surrounds an outer circumference of the drive shaft (34),
the engine main body (10) includes a mounting hole (14) into which the tubular part (31) is inserted, and
the tubular part (31) and the mounting hole (14) are fitted together through a sealing member (32).

5. The method of removing an accessory of an engine according to any one of claims 1 to 4,
wherein the end-less member is a chain (22),
the rotating body is a sprocket body (40), and
a tooth-jumping prevention rib (16,25) that prevents tooth jumping of the chain (22) is provided outwards in a radial direction of the sprocket body (40) to at least one among the engine main body (10) and the cover member (20).

6. The method of removing an accessory of an engine according to claim 5,
wherein the engine main body (10) and the cover member (20) are joined through a flange (13,21), and
the tooth-jumping prevention rib (16,25) is provided at the flange (13,21).

7. The method of removing an accessory of an engine according to claim 5,
wherein a guide rib (26) for guiding oil is provided to either one among the engine main body (10) and the cover member (20) so as to cover a circumferential direction of the sprocket body (40), and
the tooth-jumping prevention rib (16,25) is provided to the guide rib (26).

8. The method of removing an accessory of an engine according to any one of claims 1 to 7,
wherein the accessory is a fuel injection pump (30) that supplies fuel to the engine (1).

9. An accessory mounting structure for an engine, the engine (1) including an end-less member (22) and a rotating body (40) for transmitting rotation of a crankshaft (11) to an accessory (30), and
a fastening member (37) for fastening the rotating body (40) to a drive shaft (34) of the accessory (30),
wherein the end-less member (22) and the rotating body (40) are housed between an engine main body (10) and a cover member (20),
the structure comprising:
a first cylindrical rib (43) that extends from the rotating body (40) towards the cover member (20);
a second cylindrical rib (44) that extends from the rotating body (40) towards the engine main body (10);
a first retention rib (24) that extends from the cover member (20) towards the rotating body (10) so as to overlap with the first cylindrical rib (43) in a radial direction; and
a second retention rib (15) that extends from the engine main body (10) towards the rotating body (40) so as to overlap with the second cylindrical rib (44) in a radial direction,
wherein threads (48) are formed in an inner circumference of one among the first cylindrical rib (43) and the first retention rib (24) that is located more inwards, and the drive shaft (34) can be pushed out using a tool (50) having threads (51) that thread with said threads (48).

## Patentansprüche

1. Verfahren zum Entfernen eines Nebenaggregats eines Motors, wobei der Motor (1) enthält: ein endloses Element (22) und einen Rotationskörper (40) zum Übertragen der Drehung einer Kurbelwelle (11) auf das Nebenaggregat (30);
ein Befestigungselement (37) zum Befestigen des Rotationskörpers (40) an einer Antriebswelle (34) des Nebenaggregats (30),
wobei das endlose Element (22) und der Rotationskörper (40) zwischen einem Motorhauptkörper (10) und einem Deckelelement (20) aufgenommen sind;
eine erste zylindrische Rippe (43), die sich von dem Rotationskörper (40) zu dem Deckelelement (20) hin erstreckt;
eine zweite zylindrische Rippe (44), die sich von dem Rotationskörper (40) zu dem Motorhauptkörper (10) hin erstreckt;
eine erste Halterippe (24), die sich von dem Deckelelement (20) zu dem Rotationskörper (40) hin erstreckt, so dass sie in radialer Richtung mit der ersten zylindrischen Rippe (43) überlappt; und
eine zweite Halterippe (15), die sich von dem Motorhauptkörper (10) zum Rotationskörper (40) hin erstreckt, so dass sie in radialer Richtung mit der zweiten zylindrischen Rippe (44) überlappt,
wobei das Verfahren aufweist: Entfernen des Nebenaggregats (30) von dem Motorhauptkörper (10) durch die Ausbildung eines Gewindes (48) in einer Innenumfangsfläche von jener der ersten zylindrischen Rippe (43) und der ersten Halterippe (24), die weiter einwärts angeordnet ist, und Auspressen der Antriebswelle (34) mittels eines Werkzeugs (50), das ein Gewinde (51) aufweist, das mit dem Gewinde (48) in Eingriff steht.

2. Das Verfahren zum Entfernen eines Nebenaggregats eines Motors nach Anspruch 1,
wobei das Nebenaggregat (30) von dem Motorhauptkörper (10) entfernt wird durch Ausbildung des Gewindes (48) in einem Innenumfang der ersten zylindrischen Rippe (43), und Auspressen der Antriebswelle (34) mittels eines Werkzeugs (50).

3. Das Verfahren zum Entfernen eines Nebenaggregat eines Motors nach Anspruch 1 oder 2,
wobei die Antriebswelle (34) ein verjüngtes Teil (35) enthält, das von einer Seite des Nebenaggregats (30) zu einer Seite des Rotationskörpers (40) hin verjüngt ist, und
der Rotationskörper (40) ein verjüngtes Loch (46), enthält, in das das verjüngte Teil (35) eingesetzt ist.

4. Das Verfahren zum Entfernen eines Nebenaggregat eines Motors nach einem der Ansprüche 1 bis 3,
wobei das Nebenaggregat (30) ein rohrförmiges Teil (31) enthält, das einen Außenumfang der Antriebswelle (34) umgibt,
der Motorhauptkörper (10) ein Befestigungsloch (14) enthält, in das das rohrförmige Teil (31) eingesetzt ist, und
das rohrförmige Teil (31) und das Befestigungsloch (14) durch ein Dichtungselement (32) zusammengesetzt sind.

5. Das Verfahren zum Entfernen eines Nebenaggregat eines Motors nach einem der Ansprüche 1 bis 4,
wobei das endlose Element eine Kette (22) ist,
der Rotationskörper ein Ritzelkörper (40) ist, und
eine Zahnspring-Verhinderungsrippe (16, 25), die ein Zahnspringen der Kette (22) verhindert, in radialer Richtung des Ritzelköpers (40) auswärts an zumindest einem vom Motorhauptkörper (10) und Deckelelement (20) vorgesehen ist.

6. Das Verfahren zum Entfernen eines Nebenaggregat eines Motors nach Anspruch 5,
wobei der Motorhauptkörper (10) und das Deckelelement (20) durch einen Flansch (13, 21) verbunden sind, und
die Zahnspring-Verhinderungsrippe (16, 25) an dem Flansch (13, 21) vorgesehen ist.

7. Das Verfahren zum Entfernen eines Nebenaggregat eines Motors nach Anspruch 5,
wobei eine Führungsrippe (26) zum Führen von Öl an einem vom Motorhauptkörper (10) und Deckelelement (20) vorgesehen ist, um eine Umfangsrichtung des Ritzelkörpers (40) zu bedecken, und
die Zahnspring-Verhinderungsrippe (16, 25) an der Führungsrippe (26) vorgesehen ist.

8. Das Verfahren zum Entfernen eines Nebenaggregat eines Motors nach einem der Ansprüche 1 bis 7,
wobei das Nebenaggregat eine Kraftstoffeinspritzpumpe (30) ist, die dem Motor (1) Kraftstoff zuführt.

9. Nebenaggregatbefestigungsstruktur für einen Motor, wobei der Motor (1) ein endloses Element (22) und einen Rotationskörper (40) zum Übertragen der Drehung der Kurbelwelle (11) auf ein Nebenaggregat (30) enthält, und
ein Befestigungselement (37) zum Befestigen des Rotationskörpers (40) an einer Antriebswelle (34) des Nebenaggregats (30),
wobei das endlose Element (22) und der Rotationskörper (40) zwischen einem Motorhauptkörper (10) und einem Deckelelement (20) aufgenommen sind,
wobei die Struktur aufweist:
eine erste zylindrische Rippe (43), die sich von dem Rotationskörper (40) zu dem Deckelelement (20) hin erstreckt;
eine zweite zylindrische Rippe (44), die sich von dem Rotationskörper (40) zu dem Motorhauptkörper (10) hin erstreckt;
eine erste Halterippe (24), die sich von dem Deckelelement (20) zu dem Rotationskörper (10) hin erstreckt, so dass sie in radialer Richtung mit der ersten zylindrischen Rippe (43) überlappt; und
eine zweite Halterippe (15), die sich von dem Motorhauptkörper (10) zu dem Rotationskörper (40) hin erstreckt, so dass sie in radialer Richtung mit der zweiten zylindrischen Rippe (44) überlappt,
wobei ein Gewinde (48) in einem Innenumfang von jener der ersten zylindrischen Rippe (43) und der ersten Halterippe (24), die weiter einwärts angeordnet ist, ausgebildet ist, und die Antriebswelle (34) mittels eines Werkzeugs (50) ausgedrückt werden kann, das ein Gewinde (51) aufweist, das mit dem Gewinde (48) in Eingriff steht.

## Revendications

1. Un procédé d'enlèvement d'un accessoire d'un moteur, le moteur (1) comprenant : un élément sans fin (22) et un corps rotatif (40) pour transmettre une rotation d'un vilebrequin (11) à l'accessoire (30) ;
un élément de fixation (37) pour fixer le corps rotatif (40) à un arbre d'entraînement (34) de l'accessoire (30) ;
dans lequel l'élément sans fin (22) et le corps rotatif (40) sont logés entre un corps principal du moteur (10) et un élément de couverture (20) ;
une première nervure cylindrique (43) qui s'étend du corps rotatif (40) vers l'élément de couverture (20) ;
une deuxième nervure cylindrique (44) qui s'étend du corps rotatif (40) vers le corps principal du moteur (10) ;
une première nervure de rétention (24) qui s'étend à partir de l'élément de couverture (20) vers le corps rotatif (40) de manière à chevaucher la première nervure cylindrique (43) dans une direction radiale ; et
une deuxième nervure de rétention (15) qui s'étend à partir du corps principal du moteur (10) vers le corps rotatif (40) de manière à chevaucher la deuxième nervure cylindrique (44) dans une direction radiale,
le procédé comprenant l'enlèvement de l'accessoire (30) du corps principal du moteur (10) par formation de filets (48) dans une circonférence interne d'une parmi la première nervure cylindrique (43) et la première nervure de rétention (24) qui est située plus vers l'intérieur et extraction de l'arbre d'entraînement (34) en utilisant un outil (50) doté de filets (51) qui entrent en prise avec lesdits filets (48).

2. Le procédé d'enlèvement d'un accessoire d'un moteur selon la revendication 1,
dans lequel l'accessoire (30) est enlevé du corps principal du moteur (10) par formation desdits filets (48) dans une circonférence interne de la première nervure cylindrique (43) et extraction de l'arbre d'entraînement (34) en utilisant l'outil (50).

3. Le procédé d'enlèvement d'un accessoire d'un moteur selon l'une des revendications 1 ou 2,
dans lequel l'arbre d'entraînement (34) comprend une partie biseautée (35) qui se rétrécit à partir d'un côté de l'accessoire (30) vers un côté du corps rotatif (40), et
le corps rotatif (40) comprend un orifice biseauté (46) dans lequel la partie biseautée (35) est insérée.

4. Le procédé d'enlèvement d'un accessoire d'un moteur selon l'une des revendications 1 à 3,
dans lequel l'accessoire (30) comprend une partie tubulaire (31) qui entoure une circonférence externe de l'arbre d'entraînement (34),
le corps principal du moteur (10) comprend un orifice de fixation (14) dans lequel la partie tubulaire (31) est insérée et
la partie tubulaire (31) et l'orifice de fixation (14) sont ajustés ensemble au travers d'un élément d'étanchéité (32).

5. Le procédé d'enlèvement d'un accessoire d'un moteur selon l'une des revendications 1 à 4, dans lequel l'élément sans fin est une chaîne (22),
le corps rotatif est un corps de pignon (40) et
une nervure de prévention du saut de la dent (16, 25) qui empêche une dent de sauter de la chaîne (22) est prévue vers l'extérieur dans une direction radiale du corps de pignon (40) vers au moins un parmi le corps principal du moteur (10) et l'élément de couverture (20).

6. Le procédé d'enlèvement d'un accessoire d'un moteur selon la revendication 5,
dans lequel le corps principal du moteur (10) et l'élément de couverture (20) sont reliés par l'intermédiaire d'une bride (13, 21) et
la nervure de prévention du saut de la dent (16, 25) est prévue sur la bride (13, 21).

7. Le procédé d'enlèvement d'un accessoire d'un moteur selon la revendication 5,
dans lequel une nervure de guidage (26) pour guider l'huile est prévue sur l'un parmi le corps principal du moteur (10) et l'élément de couverture (20) de manière à couvrir une direction circonférentielle du corps de pignon (40) et
la nervure de prévention du saut de la dent (16, 25) est prévue sur la nervure de guidage (26).

8. Le procédé d'enlèvement d'un accessoire d'un moteur selon l'une des revendications 1 à 7,
dans lequel l'accessoire est une pompe à injection de carburant (30) qui amène le carburant au moteur (1).

9. Une structure de fixation d'un accessoire pour un moteur, le moteur (1) comprenant un élément sans fin (22) et un corps rotatif (40) pour transmettre une rotation d'un vilebrequin (11) à un accessoire (30), et
un élément de fixation (37) pour fixer le corps rotatif (40) à un arbre d'entraînement (34) de l'accessoire (30),
dans lequel l'élément sans fin (22) et le corps rotatif (40) sont logés entre un corps principal du moteur (10) et un élément de couverture (20),
la structure comprenant :
une première nervure cylindrique (43) qui s'étend du corps rotatif (40) vers l'élément de couverture (20) ;
une deuxième nervure cylindrique (44) qui s'étend du corps rotatif (40) vers le corps principal du moteur (10),
une première nervure de rétention (24) qui s'étend à partir de l'élément de couverture (20) vers le corps rotatif (10) de manière à chevaucher la première nervure cylindrique (43) dans une direction radiale ; et
une deuxième nervure de rétention (15) qui s'étend à partir du corps principal du moteur (10) vers le corps rotatif (40) de manière à chevaucher la deuxième nervure cylindrique (44) dans une direction radiale,
dans lequel des filets (48) sont formés dans une circonférence interne de l'une parmi la première nervure cylindrique (43) et la première nervure de rétention (24) qui est située plus vers l'intérieur et l'arbre d'entraînement (34) peut être extrait en utilisant un outil (50) possédant des filets (51) qui entrent en prise avec lesdits filets (48).
